# EUROPÄISCHE PATENTSCHRIFT

(11) **EP 0 893 960 B1**
(45) Veröffentlichungstag und Bekanntmachung des Hinweises auf die Patenterteilung: **12.06.2002**
(21) Anmeldenummer: 97915360.8
(22) Anmeldetag: 11.03.1997
(51) Int. Cl.: A47J 31/08, A47J 31/06

(54) **KAFFEEMASCHINE SOWIE FILTERELEMENT HIERZU**
COFFEE MACHINE AND FILTER ELEMENT THEREFOR
MACHINE A CAFE ET ELEMENT-FILTRE APPROPRIE

(30) Priorität: 12.03.1996 DE 19609561
(43) Veröffentlichungstag der Anmeldung: 03.02.1999
(73) Patentinhaber: Braun GmbH, Kronberg (DE)
(72) Erfinder: BIELFELDT, Uwe, D-61476 Kronberg (DE); BIRK, Andreas, D-61350 Bad Homburg (DE); KLEEMANN, Christof, D-61476 Kronberg (DE); STÜCHER, Reinhard, D-57258 Freudenberg (DE); TREBITZ, Bernd, D-35510 Butzbach (DE)
(86) Internationale Anmeldenummer: EP9701226
(87) Internationale Veröffentlichungsnummer: WO9733508

(56) Entgegenhaltungen:
- CH-A- 241 385
- DE-A- 4 130 446
- FR-A- 1 562 008
- FR-A- 1 575 181
- FR-A- 2 691 059
- GB-A- 2 028 675
- US-A- 3 089 405
- PATENT ABSTRACTS OF JAPAN vol. 096, no. 002, 29.Februar 1996 & JP 07 275127 A (SASAKI TSUSHO KK), 24.Oktober 1995,

## Beschreibung

Die Erfindung betrifft eine elektrische Kaffeemaschine mit einem von einem Filtergehäuse getragenen Filterelement zur Aufnahme von Kaffeemehl und mit einem oberhalb des Filterelements ausgebildetem Brühkopf mit einer oder mehreren Auslaßöffnungen, aus denen von einem elektrischen Wassererhitzer erhitztes Wasser in das Filterelement zum Zwecke der Extraktion einfließt, wobei das Filterelement hängend im Filtergehäuse angeordnet ist.

Aus der DE-A-41 30 446 ist eine Kaffeemaschine bekannt, bei der der Brühkopf aus einer oberhalb des Kaffeefilters ausgebildeten Auslaßöffnung besteht, aus der von einem im Durchlauferhitzer oder einem Wasserkessel erhitztes Wasser austritt, das in die obere Öffnung des Kaffeefilters einfließt und das darunter befindliche Kaffeemehl durchfeuchtet und extrahiert. Das fertige Kaffeegetränk fließt über eine Auslaßöffnung über in darunter abgestelltes Kaffeegefäß ab.

Bei den meisten Kaffeemaschinen, wie dies auch in der oben erwähnten Kaffeemaschine der Fall ist, besteht das Filterelement aus Papier und weist eine im wesentlichen kegelstumpfförmige Form auf, wenn das Filterelement in das Filtergehäuse eingelegt ist. Beim Brühvorgang stellt sich heraus, daß das Kaffeemehl hier nicht gleichmäßig genug von Wasser durchflossen und somit auch nicht das Kaffeemehl ausreichend extrahiert wird. Dies erkennt man häufig an nicht oder unzureichend extrahiertem Kaffeemehl im Bereich der unteren Ecken des Kaffeefilters.

Ein Papierfilter, wie er in der hier beschriebenen elektrischen Kaffeemaschine beschrieben wird, ist auch beispielsweise in der DE-A-2034309 beschrieben. Eine weniger gute Extrahierung des Kaffeemehls ergibt sich auch bei dieser Ausführungsform dann, wenn beispielsweise nicht automatisch sondern von Hand aufgebrüht wird. Denn auch hier gelangt das heiße Wasser nicht ausreichend gut in die Ecken im Bereich des Bodens des Filterelements. Bei einem derartigen Brühverfahren hat sich auch herausgestellt, daß aufgrund des schwallweisen Aufgießens des Kaffeemehls immer wieder das Kaffeemehl aufgewirbelt wird und so die feinsten Bestandteile des Kaffeemehls an der Oberfläche aufschwimmen und sich dort ablagern. Dies führt letztendlich dazu, daß das heiße Wasser nicht ausreichend schnell durch das Kaffeemehl hindurchfließen kann, wodurch auch die Extraktionszeit verhältnismäßig länger dauert. Am Ende des Brühvorgangs beginnt dann die Nachtropfzeit, die auch hier verhältnismäßig viel Zeit in Anspruch nimmt, da das Wasser zu langsam durch das komprimierte Kaffeemehl durchfließt. Auch sammelt sich hier an den Ecken wie am Rand zuviel Kaffeemehl an, das nicht ausreichend extrahiert wird.

Aus dem deutschen Gebrauchsmuster 7037082 ist weiterhin ein kegelförmiges Filterelement bekannt, das in die Öffnung einer Tasse eingehängt ist. Auch hier ergeben sich aufgrund der spitzkegeligen Ausbildung des Filterelements weniger gute Extraktionsergebnisse.

Aus der DE-A-15 79 354 ist ein Filtriergerät bekannt, bei dem das aus Papier hergestellte Filterelement in die Öffnung eines Filtergehäuses eingesetzt ist. Hierbei liegt das Filterelement sowohl an der Innenfläche der am Filtergehäuse ausgebildeten Rippen wie an den zwischen den Rippen liegenden Nutenbereichen an, die, wie dies bei den meist heute verwendeten Kaffeemaschinen der Fall ist, das Abfließen des Filtrats aus dem Filterelement behindern. Dies ist insbesondere deshalb der Fall, da das feuchte Filterpapier sich in der Regel durchwölbt und so ein großer Teil der Filteraußenfläche blockiert ist. Zwar ist hier der Boden des Filterelements konkav ausgebildet, dieser stützt sich aber an den Rippen und an den Nuten im Filterelement ab, so daß hier der extrahierte Kaffee aus dem Filterelement nur schwer abfließen kann, da die Rippen wie Nuten die Außenfläche des Filterelements verdecken.

Weiterhin ist aus der US-4,656,932 ein topfförmiges Filtergehäuse bekannt, in dessen Ausnehmnung ebenfalls ein topfförmiges, nach unten sich konisch verjüngendes Filterelement eingesetzt ist. Das Filterelement ist in seiner Außenfläche wellenförmig ausgebildet. Das Filterelement liegt am Boden sowie an der Seitenwand des Filtergehäuses an, so daß auch hier das Kaffeegetränk verhältnismäßig schlecht abfließen kann. Durch die topfförmige, nach unten sich konisch verjüngende Ausbildung des Filterelements sind auch hier die durch das Kaffeemehl von Wasser zurückgelegten Wege unterschiedlich lang, bis das Wasser das Filterelement erreicht.

Aus der US-C-3,089,405 ist eine Filtriervorrichtung für eine Kaffeemaschine der eingangs beschriebenen Art bekannt, die zum Herstellen von Brühgetränken dient. Die Filtriervorrichtung besteht aus einem ringähnlichen Abschnitt eines Wasserrohres, kurz Ringleitung genannt, an dessen Außenseite eine Filtertüte frei eingehängt ist. Die Filtertüte ist mit Kaffeemehl befüllbar, wobei zum Zwecke der Filtration heißes Wasser über deren Öffnung einleitbar ist. Das über das offene Ende des ringförmigen Wasserrohrs eindringende heiße Wasser fließt nach Aufnahme von Extraktionsstoffen (Extraktionsvorgang) aus dem Extrahiergut an der Außenwand der Filtertüte frei ab und wird in einem darunter abgestellten Gefäß aufgefangen.

Zur Montage der Filtertüte wird diese über Haltemittel am Filterträger befestigt. Dazu ist in die Filtertüte an ihrem oberen Ende ein elastisches Band oder eine elastische Schnur eingezogen, die zusammen mit der Öffnung der Filtertüte von außen um die als Filterträger ausgebildete Ringleitung gezogen wird. Nach Loslassen der aufgeweiteten Öffnung der Filtertüte oberhalb der Ringleitung zieht sich die elastische Schnur derart zusammen, daß der Durchmesser der Filtertüte oberhalb der Ringleitung kleiner wird als der Abschnitt um die Ringleitung herum. Auf diese Weise ist die Filtertüte an der Ringleitung befestigt, damit sie während des Brühbetriebs nicht zu Boden fallen kann.

Abgesehen von der verhältnismäßig aufwendigen Montage der Filtertüte an der Ringleitung - denn die Öffnung der Filtertüte muß durch Auseinanderziehen der elastischen Schnur so weit geöffnet werden, bis sie von unten her über die Außenfläche der Ringleitung gezogen werden kann - muß in sehr aufwendiger Weise in den oberen Endabschnitt der Filtertüte ein elastisches Band oder eine elastische Schnur eingezogen sein, wenn das Filterelement durch die elastische Schnur am Filterträger gehalten werden soll.

Eine derartige Befestigung einer Filtertüte an einem Filterträger einer Brühgetränkezubereitungsmaschine ist aufwendig und kompliziert, da es letztendlich von der Bedienungsperson abhängt, wie geschickt sie die Öffnung des Filterelements aufweitet, um sie dann über die Ringleitung zu stülpen und wie gut sie anschließend das Filterelement am Filterträger ausrichtet, damit die Längsachse des Filterelements im wesentlichen senkrecht verläuft; denn bei einer unsachgemäßen Montage kann es nämlich leicht vorkommen, daß die Filterpapiertüte schräg hängt, reißt und/oder vom Filterträger gar wieder herunterfällt, was zu unangenehmen Verbrühungen einer Bedienungsperson führen kann.

Die Notwendigkeit der Benutzung einer extra am Filterelement angebrachten elastischen Schnur oder Gummirings und die aufwendige Montage dieses Gummirings an der Filtertüte ist weniger komfortabel und erhöht den Preis der einzelnen Filtertüte, was sich insbesondere dann deutlich bemerkbar macht, wenn täglich mehrmals Kaffee gebrüht wird. Eine derartige Filtertütenbefestigung ist wohl daher nur dort einsetzbar, wo die Tüte selbst aus stabilem Filtermaterial besteht.

Aufgabe dieser Erfindung ist es, eine Kaffeemaschine der eingangs beschriebenen Art sowie ein Filterelement zum Extrahieren von Kaffee zu schaffen, mit der bzw. mit dem die Handhabung erleichtert wird.

Diese Aufgabe wird erfindungsgemäß durch die kennzeichnenden Merkmale des Patentanspruchs 1 sowie durch den Patentanspruch 16 gelöst. Die Haltevorrichtung dient zur Aufhängung des Filterelements. Hierdurch läßt sich auch das Filterelement leichter handhaben und leichter in der Kaffeemaschine einhängen, wobei die Haltevorrichtung Teil des Filtergehäuses der Kaffeemaschine ist (Anspruch 2). Nach den Merkmalen des Anspruchs 3 kann das Kaffeegetränk das Filterelement ungehindert verlassen und dies im wesentlichen gleichmäßig über die gesamte Außenfläche.

Dadurch, daß das Filterelement nach den Merkmalen des Patentanspruchs 4 konkav ausgebildet ist, um so eine möglichst große Außenfläche zu erreichen, und gleichzeitig hängend angeordnet ist, wird bei einem kontinuierlich einfließenden Heißwasserstrom in das Filterelement eine möglichst gleichmäßige Extrahierung des im Filterelements befindlichen Kaffeemehls erreicht. Durch den gleichmäßigen Wasserstrom wird das Kaffeemehl möglichst wenig aufgewirbelt, so daß sich an der Oberfläche des Mahlgutes nicht die feinsten Kaffeepartikel absetzen können, die zu einem verstärkten Verschließen des Kaffeekuchens für die Durchleitung von Heißwasser führen. Gleichzeitig wird durch den weitgehendst kontinuierlichen Wasserstrom das Kaffeemehl nicht allzu stark aufgewirbelt und verdichtet, so daß es verhältnismäßig großporig bleibt und so gute Extraktionsergebnisse hervorgerufen werden. Durch das frei hängende Filterelement kann das Kaffeegetränk dieses ungehindert verlassen, und dies im wesentlichen gleichmäßig über die gesamte Außenfläche.

Durch die Merkmale des Patentanspruchs 5 ergibt sich während des Aufbrühvorgangs, daß das Kaffeemehl äußert beruhigt an der Wandung des Filterelements liegenbleibt und nicht immer wieder neu aufgewirbelt wird, um so die feinen Teilchen aufzuschwemmen und damit den Kaffeekuchen mehr oder weniger undurchlässig zu machen. Um einen möglichst kontinuierlichen Heißwasserabfluß in das Filterelement zu erreichen, können Durchlauferhitzer (Anspruch 7 und 8) oder auch Wasserkessel (Anspruch 9 und 10) benutzt werden, allerdings muß bei Durchlauferhitzern die Heizleistung so groß bemessen sein, daß in Abhängigkeit der Querschnittsgröße der Auslaßöffnungen immer noch ausreichend Wasser weitgehendst kontinuierlich aus diesen abfließen kann. Bei diesem Filtersystem wird ein Überlaufen des Filterelements vermieden, da der Kaffee gleichmäßig an allen Seiten aus dem Filterelement abfließt, da die Dicke des Kaffeekuchens im wesentlichen gleichmäßig ist und durch den beruhigten Brühvorgang sich nicht komprimiert.

Selbstverständlich können als Filterelement auch solche Papierfilter gewählt werden, die eine wellige Oberfläche aufweisen, allerdings beschreibt ihre Hüllkurve eine konkave, nach außen zum Auffanggefäß gewölbte Fläche, die vorzugsweise halbkugelförmig ausgebildet ist (Anspruch 17). Hierdurch wird eine besonders große Filterfläche geschaffen, an die sich das Kaffeemehl gleichmäßig von innen anlegt. Daß das Heißwasser nahezu gleichmäßig durch das Kaffeemehl durchfließt, ergibt sich auch anhand von Temperaturmessungen, die zeigen, daß im nahezu gesamten Kaffeekuchenbereich nahezu gleiche Temperaturen auftreten. Würden nämlich einige Bereiche weniger vom heißen Wasser durchflossen werden, so würden auch dort, wie im Stand der Technik beschrieben, erheblich niedrigere Temperaturen auftreten. Das Filterelement kann auch leicht elliptisch und eine sonst nach außen gewölbte homogene Form annehmen. Wichtig ist dabei auch, daß die Auslaßöffnungen im wesentlichen im zentralen Bereich des Filterelements oberhalb diesem im Brühkopf einer Kaffeemaschine angeordnet sind, damit ein Aufwirbeln des Kaffeemehl möglichst vermieden wird. Eine großflächige Regendusche hingegen begünstigt ein Aufwirbeln des Kaffeemehls, was nicht erwünscht ist.

Ist das Filterelement ausschließlich nur aus Filterpapier hergestellt, so kann es mit einer Haltevorrichtung umgeben werden, an der dann das Filterelement in der Kaffeemaschine aufgehängt wird. Es besteht aber auch die Möglichkeit, daß das aus Papier hergestellte Filterelement zu seiner Abstützung von einem gitterähnlichen Netzwerk (Anspruch 12) umgeben ist, das ebenfalls konkav bzw. kugelförmig ausgebildet ist und sich so an die Form des Filterelements anpaßt. Gemäß Anspruch 13 ist das Gitter mit der Haltevorrichtung versehen, über die sich das Filterelement am Gitter und dieses wiederum am Filterträger abstützt. Auch hier kann nahezu ungehindert das Kaffeemehl das Filterelement durchdringen und an der Außenseite abfließen (Ansprüche 12, 13, 14).

Weitere vorteilhafte Ausgestaltungen ergeben sich aus den Merkmalen der Patentansprüche 18 bis 26. Nach den Ansprüchen 21 bis 26 ist der Rand aus demselben Filterpapiermaterial wie der übrige Teil.

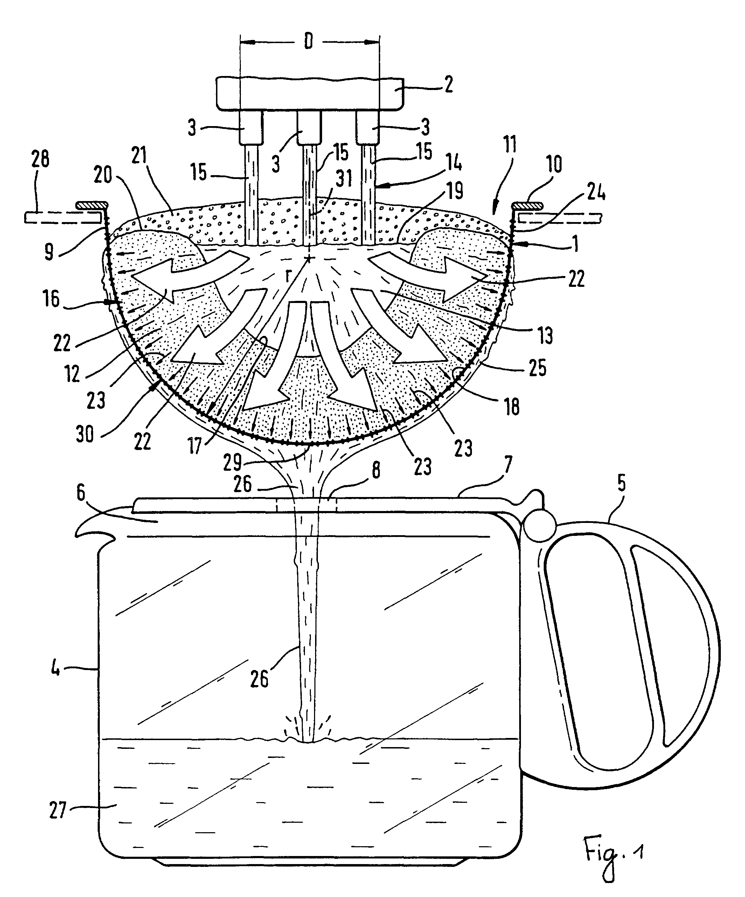

Ein einziges Ausführungsbeispiel ist in der Zeichnung dargestellt und wird im folgenden näher beschrieben.

Die einzige Figur zeigt die prinzipielle Darstellung der Erfindung, wovon oberhalb des Filterelements 1, das in der Zeichnung halbkugelförmig ausgebildet ist, ein Brühkopf 2 mit an der Unterseite ausgebildeten drei Auslaßöffnungen 3 versehen ist, die im wesentlichen zentral zum Filterelement 1 verlaufen. Anstelle von drei Auslaßöffnungen 3 können auch mehr oder weniger benutzt werden, allerdings muß dann der Auslaßquerschnitt entsprechend größer oder kleiner ausgebildet sein. Während das Filterelement 1 einen Radius r von etwa 40 bis 70 mm, speziell 60 mm, (bei 12 Tassen) aufweist, sind die Auslaßöffnungen 3 in einem Durchmesserbereich D von etwa 20 bis 60 mm, speziell 40 mm, oder kleiner angeordnet. Der Brühkopf 2 ist Teil einer nicht näher dargestellten Kaffeemaschine. Unterhalb des Filterelements 1 befindet sich eine Kaffeekanne 4, vorzugsweise aus Glas, mit einem Handgriff 5. Die Öffnung 6 der Kaffeekanne 4 ist von einem Deckel 7 verschlossen, der eine zentrale Einlaßöffnung 8 aufweist.

Das Filterelement 1 verläuft an seinem äußeren oberen Rand 9 leicht konisch nach außen und endet an einem winklig zum Rand 9 verlaufenden Ringbund 10. Der Ringbund 10 ist ebenfalls aus Papier hergestellt und ist entweder einteilig mit dem Filterelement 1 oder an dieses angeheftet, beispielsweise durch Kleben, Krempen, Thermofixieren, Formverstemmen oder sonst eine einfache Verbindungsart.

Wie aus der Figur weiter deutlich hervorgeht, befindet sich im Aufnahmeraum 11 des Filterelements 1 Kaffeemehl 12, das nach Einfüllen normalerweise aufgehäuft ist. In der einzigen Figur weist das Kaffeemehl 12 in seinem zentralen Bereich 31 eine kraterähnliche Vertiefung 13 auf, die durch das einfließende Wasser 14 während des Brühvorgangs ausgeschwemmt wurde. In diesem Ausführungsbeispiel sind die drei Auslaßöffnungen 3 so eng nebeneinander, daß sich beim Brühvorgang eine im wesentlichen halbkugelförmige Vertiefung 13 ergibt. Es ist aber auch denkbar, daß die einzelnen Heißwasserstrahlen 15 einzelne örtliche Vertiefungen (nicht dargestellt) ergeben, die geringfügig voneinander getrennt sind, wenn die Auslaßöffnungen 3 nicht nebeneinander sondern im Kreis angeordnet sind.

Beste Extraktion wird erreicht, wenn sich, wie dies in der einzigen Figur dargestellt ist, die Vertiefung 13 im wesentlichen halbkugelförmig ausformt, so daß der vom Kaffeemehl 12 gebildete Kaffeekuchen 16 mit seiner Innenfläche 17 der kugeligen Wandung 18 des Filterelements 1 folgt.

Zwar kann der zentrale Bereich des Kaffeekuchens 16 etwas mehr ausgehöhlt sein, was aber in der Figur nicht dargestellt ist, um so die Durchflußgeschwindigkeit des heißen Wassers 15 im tiefsten Bereichs etwa der Durchflußgeschwindigkeit im Seitenbereich anzupassen, denn am tiefsten Bereich ist auch der Kaffeekuchen 16 am stärksten komprimiert, so daß dann durch den höheren hydrostatischen Druck des Wassers 14 in diesem Bereich das Wasser 14 dort genauso schnell abfließt wie im höhergelegenen Seitenbereich, der weniger komprimiert ist.

Wie die Figur deutlich zeigt, übersteigt der maximale Wasserpegel 19 nicht nennenswert den oberen Randbereich 20 des Kaffeekuchens 16, da die Extraktionsgeschwindigkeit verhältnismäßig hoch ist. Lediglich an der Oberfläche des Wasserspiegels 19 bildet sich Kaffeeschaum 21, der sich aufgrund von aufsteigenden Blasen bildet, die bei Durchnässen bzw. Durchfeuchten des Kaffeemehls 12 entstehen. Aufgrund des erfindungsgemäßen Filterelements 1 und des kontinuierlichen Einlaufs des Heißwassers 14 in das Filterelement 1 sowie des im wesentlichen freihängenden Filterelements 1 ergibt sich ein verhältnismäßig gleichmäßiger Durchfluß des Heißwassers 14 durch das Kaffeemehl 12, wie dies durch die großen Pfeile 22 angezeigt ist. Auch am Filterelement 1 selbst fließt das aus dem Kaffeemehl 12 extrahierte Getränk heraus, wie dies durch die kleinen Pfeile 23 angezeigt ist. Wie aus der Figur hervorgeht, kann sich an der Außenfläche 24 des Filterelements 1 förmlich ein Kaffeestrom 25 bilden, der ungehindert zum tiefsten Punkt des Filterelements 1 fließen kann, wo er sich dann zu einem gemeinsamen Strahl 26 bündelt. Der Strahl 26 fließt dann über die Öffnung 8 am Deckel 7 in die Kanne 4 ein und wird dort als Getränk 27 gesammelt.

Unterhalb des Ringbundes 10 kann eine Haltevorrichtung 28 befestigt sein, die zur Aufhängung des Filterelements 1 dient. Hierdurch läßt sich auch das Filterelement 1 leichter handhaben und leichter in der Kaffeemaschine oder in ein Gefäß 4 einhängen. Es ist aber auch möglich, mit Hilfe des Ringbundes 10 das Filterelement 1 in der Haltevorrichtung 28 einzuhängen, wobei dann die Haltevorrichtung 28 Teil des Filtergehäuses der Kaffeemaschine ist.

Durch die zentral am Brühkopf 2 angeordneten Auslaßöffnungen 3 bricht zwar das Kaffeemehl 12 an den direkt von den Wasserstrahlen 15 betroffenen Stellen ein und das Kaffeemehl 12 verdichtet sich im Bodenbereich dieser Krater oder Vertiefungen 13, das übrige Kaffeemehl 12 bleibt aber verhältnismäßig locker und bildet eine gute Drainage für das Heißwasser 14. Auch kann das Kaffeemehl 12 ungehindert quellen, so daß ein schnelles und gründliches Durchspülen des Kaffeekuchens 16 erreicht wird. Dies führt zu einer guten Extraktion des Kaffeemehls 12. Ein Filterüberlauf wird verhindert.

Nachdem der Brühvorgang beendet ist, das heißt, sobald das Heißwasser 14 nicht mehr aus den Auslaßöffnungen 3 fließt, läuft das Heißwasser 14 durch das porige Kaffeemehl 12, bis das Filterelement 1 leergelaufen ist. Es beginnt nun die Nachtropfzeit. Bereits nach wenigen Tropfen, ca. nach 5 bis 8 Tropfen, die an der Außenfläche 24 des Filterelements 1 am untersten Punkt 29 abtropfen, tropft der letzte Tropfen nicht mehr ab, sondern er wird sogar von dem schwammartig ausgebildeten Kaffeekuchen aufgrund von Verdunstung auf der Filteroberfläche und deshalb von auftretender Kapillarwirkung über das Filterelement 1 nach innen gesogen und ist an der Außenseite 24 dann gänzlich verschwunden (nicht dargestellt). Gerade durch den schwammartigen, lockeren Kaffeekuchen 16 wird die Nachtropfzeit erheblich reduziert, die sich nur noch in einem Bereich von ca. 30 Sekunden gegenüber sonst 2 bis 3 Minuten erstreckt.

Durch das erfindungsgemäße Filterelement 1 wird eine besonders große aktive Filterfläche 30 erreicht, wobei durch die konvexe oder kugelförmige Ausbildung des Filterelements 1 das Kaffeemehl 12 so im Filterelement 1 verteilt wird, daß in allen Richtungen senkrecht zur Innenwandung 18 gleicher Extraktionsweg entsteht, das heißt, von den kraterförmigen Vertiefungen 13 ist der Weg des Wassers 14 durch das Kaffeemehl 12 an allen Stellen im weitesten Sinne annähernd gleich groß. Dies führt gerade zu einem zeitlich besonders kurzen Filtrationsvorgang, der gegenüber herkömmlichen Filtrationsvorgängen bei gleicher Tassenzahl etwa 2 bis 3 Minuten einspart.

## Patentansprüche

1. Elektrische Kaffeemaschine mit einem von einem Filtergehäuse (28) getragenen Filterelement (1), das über seine obere Öffnung mit Kaffeemehl (12) befüllbar ist und mit einem oberhalb des Filterelements (1) ausgebildetem Brühkopf (2) mit einer oder mehreren Auslaßöffnungen (3), aus denen von einem elektrischen Wassererhitzer erhitztes Wasser (14) über die Öffnung auf das Kaffeemehl (12) zum Zwecke der Extraktion einfließt, wobei das Filterelement (1) hängend im Filterträger (28) angeordnet ist,
**dadurch gekennzeichnet,**
**daß** das Filterelement (1) an seinem äußeren oberen Rand (9) einen winklig zum Rand (9) verlaufenden Ringbund (10) aufweist, daß das Filterelement aus Filterpapier besteht, daß unterhalb des Ringbundes (9) eine das Filterelement (1) über den Ringbund (9) tragende Haltevorrichtung (28) ausgebildet ist und daß die Außenwand des Filterelements (1) gegenüber dem Filtergehäuse weitgehendst so weit auf Abstand gehalten wird, daß das durch die Wände des Filterelements abfließende Brühgetränk an der Außenwand ungehindert ablaufen kann.

2. Elektrische Kaffeemaschine nach Anspruch 1,
**dadurch gekennzeichnet,**
**daß** die Haltevorrichtung (28) Teil des Filtergehäuses der Kaffeemaschine ist.

3. Elektrische Kaffeemaschine nach Anspruch 2,
**dadurch gekennzeichnet,**
**daß** das Filterelement (1) frei hängend in der Haltevorrichtung (28) der Kaffeemaschine ausgebildet ist.

4. Elektrische Kaffeemaschine nach Anspruch 1,
**dadurch gekennzeichnet,**
**daß** das Filterelement (1) im Extraktionsbereich im wesentlichen konkav ausgebildet ist, daß die Auslaßöffnung(en) am Brühkopf im wesentlichen zentral zum Filterelement ausgebildet ist (sind).

5. Kaffeemaschine nach Anspruch 4,
**dadurch gekennzeichnet,**
**daß** der Durchlaßquerschnitt der Auslaßöffnung(en) und die Heißwasserförderung so groß bemessen sind, daß das abfließende heiße Wasser von einem im wesentlichen kontinuierlichen Wasserabfluß gebildet wird.

6. Kaffeemaschine nach Anspruch 5,
**dadurch gekennzeichnet,**
**daß** im Brühkopf ein das heiße Wasser aufnehmender Zwischenspeicher ausgebildet ist, an dessen Boden sich eine oder mehrere Auslaßöffnungen anschließen.

7. Kaffeemaschine nach Anspruch 1,
**dadurch gekennzeichnet,**
**daß** als Wassererhitzer ein selbstfördernder Durchlauferhitzer verwendet wird.

8. Kaffeemaschine nach Anspruch 7,
**dadurch gekennzeichnet,**
**daß** der Durchlauferhitzer eine Heizleistung zwischen 1200 und 2000 Watt, vorzugsweise 1600 Watt, aufweist.

9. Kaffeemaschine nach Anspruch 1,
**dadurch gekennzeichnet,**
**daß** als Wassererhitzer ein mit einer Heizeinrichtung versehener Wasserkessel verwendet wird.

10. Kaffeemaschine nach Anspruch 9,
**dadurch gekennzeichnet,**
**daß** der Wasserkessel oberhalb des Brühkopfes ausgebildet ist.

11. Kaffeemaschine nach Anspruch 9,
**dadurch gekennzeichnet,**
**daß** der Wasserkessel unterhalb des Brühkopfes ausgebildet ist und daß in der Heißwasserleitung zum Brühkopf eine von einem Elektromotor angetriebene Pumpe ausgebildet ist.

12. Kaffeemaschine nach Anspruch 1,
**dadurch gekennzeichnet,**
**daß** das Filterelement (1) von einem netzförmigen, der Form des Filterelements angepaßten Gitter umgeben ist.

13. Kaffeemaschine nach Anspruch 12,
**dadurch gekennzeichnet,**
**daß** das Gitter mit der Haltevorrichtung versehen ist.

14. Kaffeemaschine nach Anspruch 12,
**dadurch gekennzeichnet,**
**daß** das Gitter eine Maschenweite von 2 bis 10 mm aufweist.

15. Kaffeemaschine nach Anspruch 12,
**dadurch gekennzeichnet,**
**daß** das Gitter aus nichtrostendem Draht hergestellt ist.

16. Filterelement aus Filterpapier zum Gebrauch in einer Kaffee- oder Teemaschine, das an der Außenfläche eine Hüllkurve beschreibt, die konvex ausgebildet ist und das an seinem äußeren oberen Rand (9) einen winklig zum Rand (9) verlaufenden Ringbund (10) aufweist
**dadurch gekennzeichnet,**
**daß** das Filterelement (1) im wesentlichen halbkugelförmig ausgebildet ist, daß sich der obere Bereich des Randes (9) des Filterelements (1) nach außen konisch erweitert, daß sich an die konische Erweiterung der radial nach außen gerichtete Ringbund (10) anschließt und daß das Filterelement (1) mit seinem Rand (9) aus Filterpapier und der Rand (9) aus demselben Filterpapiermaterial wie der übrige Teil des Filterelements (1) bestehen.

17. Filterelement nach Anspruch 16,
**dadurch gekennzeichnet,**
**daß** das Filterelement (1) mit seinem Rand (9) einteilig aus Filterpapier besteht.

18. Filterelement nach Anspruch 17,
**dadurch gekennzeichnet,**
**daß** die Innenwandung des halbkugelförmigen Abschnitts einen Radius (r) von ca. 35 bis 70 mm, vorzugsweise 60 mm, aufweist, so daß mit der maximal aufzunehmenden Kaffeemenge bis zu 12 Tassen Kaffee zubereitet werden können.

19. Filterelement nach Anspruch 16,
**dadurch gekennzeichnet,**
**daß** es einteilig aus Filterpapier besteht.

20. Filterelement nach Anspruch 16,
**dadurch gekennzeichnet,**
**daß** es aus zwei Teilen besteht.

21. Filterelement nach Anspruch 20,
**dadurch gekennzeichnet,**
**daß** der Ringbund (10) an das Filterelement (1) angeheftet ist.

22. Filterelement nach Anspruch 20,
**dadurch gekennzeichnet,**
**daß** der Ringbund (10) angeklebt ist.

23. Filterelement nach Anspruch 20,
**dadurch gekennzeichnet,**
**daß** der Ringbund (10) angekrempt ist.

24. Filterelement nach Anspruch 20,
**dadurch gekennzeichnet,**
**daß** der Ringbund (10) des Filterelements (1) thermofixiert oder der Ringbund (10) an das Filterelement (1) thermofixiert ist.

25. Filterelement nach Anspruch 24,
**dadurch gekennzeichnet,**
**daß** der Ringbund (10) an das Filterelement (1) formverstemmt ist.

## Claims

1. Electric coffee machine comprising a filter element (1) supported by a filter housing (28), the filter element being adapted to be filled with ground coffee (12) through its top opening, and comprising a brewing head (2) provided above the filter element (1) and having one or a plurality of outlet openings (3) from which water (14) heated by an electric water heater flows through the opening onto the ground coffee (12) to extract the coffee, wherein the filter element (1) is hung into the filter housing (28),
**characterized in that** the filter element (1) at its outside upper edge (9) includes an annular collar (10) which extends at an angle relative to the edge (9), **in that** the filter element is made of filter paper, **in that** a securing device (28) which bears the filter element (1) by way of the annular collar (9) is provided below the annular collar (9), and **in that** the outside wall of the filter element (1) is essentially spaced from the filter housing by such an amount that the brewed beverage discharges through the wall of the filter element and is not impeded in flowing down the outside wall thereof.

2. Electric coffee machine as claimed in claim 1,
**characterized in that** the securing device (28) is a part of the filter housing of the coffee machine.

3. Electric coffee machine as claimed in claim 2,
**characterized in that** the filter element (1) is freely suspended in the securing device (28) of the coffee machine.

4. Electric coffee machine as claimed in claim 1,
**characterized in that** the filter element (1) has a generally concave design in the extraction area, **in that** the outlet opening(s) at the brewing head is(are) provided essentially centrally to the filter element.

5. Coffee machine as claimed in claim 4,
**characterized in that** the flow cross-section of the outlet opening(s) and the hot water supply are dimensioned such that the hot water discharges in a generally continuous water flow.

6. Coffee machine as claimed in claim 5,
**characterized in that** the brewing head comprises an intermediate hot water storage tank, and the bottom of the intermediate storage tank includes one or more outlet openings.

7. Coffee machine as claimed in claim 1,
**characterized in that** a self-feeding continuous flow heater is used as water heater.

8. Coffee machine as claimed in claim 7,
**characterized in that** the continuous flow heater has a heating capacity ranging between 1200 and 2000 watt, preferably 1600 watt.

9. Coffee machine as claimed in claim 1,
**characterized in that** a water tank equipped with a heating device is used as water heater.

10. Coffee machine as claimed in claim 9,
**characterized in that** the water tank is provided above the brewing head.

11. Coffee machine as claimed in claim 9,
**characterized in that** the water tank is provided beneath the brewing head, and **in that** a pump driven by an electric motor is mounted in a hot water line which leads to the brewing head.

12. Coffee machine as claimed in claim 1,
**characterized in that** the filter element (1) is encompassed by a net-type grid which is adapted to the shape of the filter element.

13. Coffee machine as claimed in claim 12,
**characterized in that** the grid includes the securing device.

14. Coffee machine as claimed in claim 12,
**characterized in that** the grid has a mesh size of 2 to 10 mms.

15. Coffee machine as claimed in claim 12,
**characterized in that** the grid is made of rustproof wire.

16. Filter element made of filter paper for use in a coffee machine or tea machine, wherein an outside surface of the filter element has an envelope curve of a convex design, and the filter element on its outside upper edge (9) has an annular collar (10) which extends at an angle relative to the edge (9),
**characterized in that** the filter element (1) has a generally hemispherical configuration, **in that** the upper area of the edge (9) of the filter element (1) expands conically in an outward direction, and **in that** the radially outwards directed annular collar (10) succeeds the conically expanded portion, and **in that** the filter element (1) including its edge (9) is made of filter paper and the edge (9) is made of the same filter paper material as the remaining part of the filter element (1).

17. Filter element as claimed in claim 16,
**characterized in that** the filter element (1) with its edge (9) is integrally made of filter paper.

18. Filter element as claimed in claim 17,
**characterized in that** the inside wall of the hemispherical portion has a radius (r) of 35 to 70 mms approximately, preferably 60 mms, so that with the quantity of coffee that can maximally be received up to twelve cups of coffee may be prepared.

19. Filter element as claimed in claim 16,
**characterized in that** the filter element is made of filter paper in one piece.

20. Filter element as claimed in claim 16,
**characterized in that** the filter element is comprised of two parts.

21. Filter element as claimed in claim 20,
**characterized in that** the annular collar (10) is attached to the filter element (1).

22. Filter element as claimed in claim 20,
**characterized in that** the annular collar (10) is cemented.

23. Filter element as claimed in claim 20,
**characterized in that** the annular collar (10) is flanged.

24. Filter element as claimed in claim 20,
**characterized in that** the annular collar (10) of the filter element (1) is thermoset, or the annular collar (10) is thermoset on the filter element (1).

25. Filter element as claimed in claim 24,
**characterized in that** the annular collar (10) is caulked on the filter element (1).

## Revendications

1. Machine à café électrique comportant un élément de filtre (1) porté par un boîtier de filtre (28) et qui peut être rempli par du café moulu (12) par l'intermédiaire de son ouverture supérieure et comportant une tête de chauffage à ébullition (2) formée au-dessus de l'élément de filtre (1) et comportant une ou plusieurs ouvertures de sortie (3), par lesquelles de l'eau (14) chauffée par un dispositif électrique de chauffage de l'eau, arrive, par l'intermédiaire de l'ouverture, sur le café moulu (12) pour réaliser l'extraction, l'élément de filtre (1) étant disposé à l'état suspendu dans porte-filtre (28), **caractérisée en ce que** l'élément de filtre (1) comporte, sur son bord extérieur supérieur (9), un collet annulaire (10), qui s'étend en faisant un angle par rapport au bord (9), que l'élément de filtre est constitué par du papier filtre, qu'un dispositif de retenue (28), qui porte l'élément de filtre (1) par l'intermédiaire du collet annulaire (10) est formé au-dessous du collet annulaire (10) et que la paroi extérieure de l'élément de filtre (1) est maintenue à distance aussi grande que possible du boîtier de filtre pour que la boisson bouillante, qui s'écoule à travers les parois de l'élément de filtre, puisse s'évacuer librement le long de la paroi extérieure.

2. Machine à café électrique selon la revendication 1, **caractérisée en ce que** le dispositif de retenue (28) fait partie du boîtier de filtre de la machine à café.

3. Machine à café électrique selon la revendication 2, **caractérisée en ce que** l'élément de filtre (1) est agencé de manière à être suspendu librement dans le dispositif de retenue (28) de la matière à café.

4. Machine à café électrique selon la revendication 1, **caractérisée en ce que** le filtre (1) est agencé avec une forme sensiblement concave dans la zone d'extraction et que la ou les ouvertures de sortie au niveau de la tête de chauffage à ébullition sont formées sensiblement dans une position centrale par rapport à l'élément de filtre.

5. Machine à café selon la revendication 4, **caractérisée en ce que** la section transversale de passage de la ou des ouvertures de sortie et le débit de l'eau de chaude sont dimensionnées avec des valeurs telles que l'eau chaude, qui s'évacue, est formée par une évacuation d'eau sensiblement continue.

6. Machine à café selon la revendication 5, **caractérisé en ce que** dans la tête de chauffage à ébullition est formé un accumulateur intermédiaire qui reçoit l'eau chaude et au fond duquel se raccorde une ou plusieurs ouvertures d'évacuation.

7. Machine à café selon la revendication 1, **caractérisée en ce qu'**on utilise un dispositif de chauffage à traversée à entraînement automatique en tant que dispositif de chauffage de l'eau.

8. Machine à café selon la revendication 7, **caractérisée en ce que** le dispositif de chauffage à traversée possède une puissance de chauffe comprise entre 1200 et 2000 watts et de préférence égale à 1600 watts.

9. Machine à café selon la revendication 1, **caractérisée en ce qu'**on utilise comme dispositif de chauffage de l'eau une bouilloire équipée d'un dispositif de chauffage.

10. Machine à café selon la revendication 9, **caractérisée en ce que** a bouilloire est formée au-dessus de la tête de chauffage à ébullition.

11. Machine à café selon la revendication 9, **caractérisée en ce que** la bouilloire est disposée au-dessous de la tête de chauffage à ébullition et qu'une pompe entraînée par un moteur électrique est disposée dans la canalisation d'eau chaude aboutissant à la tête de chauffage à ébullition.

12. Machine à café selon la revendication 1, **caractérisée en ce que** l'élément de filtre (1) est entouré par une grille en forme de filet, qui est adaptée à la forme de l'élément de filtre.

13. Machine à café selon la revendication 11, **caractérisée en ce que** la grille est équipée du dispositif de retenue.

14. Machine à café selon la revendication 12, **caractérisée en ce que** la grille possède une largeur de mailles de 2 à 10 mm.

15. Machine à café selon la revendication 12, **caractérisée en ce que** la grille est formée d'un fil inoxydable.

16. Elément de filtre formé de papier filtre destiné à être utilisé dans une machine à café ou à thé, qui forme, sur la surface extérieure, une courbe enveloppe qui est convexe et comporte sur son bord extérieur supérieur (9), un collet annulaire (10) et qui s'étend en faisant un angle par rapport au bord (9), **caractérisé en ce que** l'élément de filtre (1) est réalisé avec une forme essentiellement hémisphérique, que la partie supérieure du bord (9) de l'élément de filtre s'élargit vers l'extérieur avec une forme conique, que le collet annulaire (10), qui est dirigé radialement vers l'extérieur, se raccorde à l'élargissement conique et que l'élément de filtre (1) équipé de son bord (9) formé de papier filtre et le bord (9) sont constitués par le même matériau de papier filtre que l'autre partie de l'élément de filtre (1).

17. Elément de filtre selon la revendication 16, **caractérisé en ce que** l'élément de filtre (1) est réalisé d'un seul tenant avec son bord (9), en papier-filtre.

18. Elément de filtre selon la revendication 17, **caractérisé en ce que** la paroi intérieure de la section de forme hémisphérique possède un rayon (r) d'environ 35 à 70 mm et de préférence égal à 60 mm, de sorte qu'avec la quantité de café devant être reçue au maximum on peut préparer jusqu'à 12 tasses de café.

19. Elément de filtre selon la revendication 16, **caractérisé en ce qu'**il est formé d'un seul tenant en papier-filtre.

20. Elément de filtre selon la revendication 16, **caractérisé en ce qu'**il est formé de deux parties.

21. Elément de filtre selon la revendication 20, **caractérisé en ce que** le collet annulaire (10) est agrafé à l'élément de filtre (1).

22. Elément de filtre selon la revendication 20, **caractérisé en ce que** le collet annulaire (10) est collé.

23. Elément de filtre selon la revendication 20, **caractérisé en ce que** le collet annulaire (10) est fixé par rabattement.

24. Elément de filtre selon la revendication 20, **caractérisé en ce que** le collet annulaire (10) de l'élément de filtre (1) est thermofixé ou le collet annulaire (10) est fixé sur l'élément de filtre (1).

25. Elément de filtre selon la revendication 24, **caractérisé en ce que** le collet annulaire (10) est fixé par matage sur l'élément de filtre (1).
